# EUROPEAN PATENT APPLICATION

(11) **EP 4 632 259 A1**
(43) Date of publication of application: **15.10.2025**
(21) Application number: 23900237.1
(22) Date of filing: 14.08.2023
(51) Int. Cl.: F16L 37/091, F16L 37/12

(54) **QUICK CONNECTOR**

(30) Priority: 05.12.2022 JP 2022194435
(71) Applicant: Sanoh Industrial Co., Ltd., Shibuya-ku Tokyo 150-0002 (JP)
(72) Inventor: OKADA, Hiroyuki, Koga-shi, Ibaraki 306-0041 (JP)
(74) Representative: dompatent von Kreisler Selting Werner - Partnerschaft von Patent- und Rechtsanwälten mbB
(86) International application number: PCT/JP2023/029441
(87) International publication number: WO 2024/122109

(57) **Abstract**

A quick connector has a housing, a retainer, and a push-in member mounted at an outer peripheral portion of the housing and able to be pushed in when a pipe is inserted as far as a restraint position. At each of respective side surfaces of the outer peripheral portion of the housing, a plurality of first fit-together portions are provided at the insertion direction, and catching holes are provided. The push-in member has a base portion, a pair of leg portions extending from the base portion and nipping the outer peripheral portion at sides that include the respective side surfaces, a plurality of second fit-together portions respectively provided at the pair of leg portions and respectively fitting together with the plurality of first fit-together portions movably in the intersecting direction, and hook portions provided at the pair of leg portions and entering into the housing from the catching holes and being pushed out from the catching holes by the spool portion when the pipe is inserted as far as the restraint position.

## Description

### Technical Field

The technique of the present disclosure relates to a quick connector.

### Background Art

Japanese Patent No. 4954752 discloses a quick connector having a housing, a retainer, and a joining confirming member. The final end of a tube that is to be joined and has a spool portion is inserted in the housing. The retainer restrains the spool portion by locking claws, and the tube that is to be joined and the housing are joined together. The joining confirming member functions to confirm that the tube has been inserted sufficiently up to the position where the spool portion and the retainer are completely joined. This joining confirming member is formed from a U-shaped member at which a pair of leg portions extend parallel. Hook portions, which engage with catching holes that are open at the side surfaces of the housing, are formed at the distal ends of the leg portions. Concave portions for anchoring on the lower edges of the catching holes are formed at the outer side surfaces of the hook portions. The joining confirming member engages with the housing at a temporarily assembled position, so as to be able to move only in the pushing-in direction from a radial direction of the housing. Due to the tube being inserted in the housing all the way to the joined position, and the spool portion being made to reach the position of engaging completely with the locking claws of the retainer, the hook portions of the confirming member are pushed out from the catching holes by the spool portion. Thereafter, the joining confirming member changes from the temporarily assembled position to a state in which it being pushable inward.

### SUMMARY OF INVENTION

### Technical Problem

By the way, in the quick connector that is disclosed in Japanese Patent No. 4954752, pairs of ribs between which the leg portions of the joining confirming member are held are formed at the side surfaces of the housing. The pairs of ribs function to guide movement at times when the leg portions come out and the leg portions are pushed in. However, in a case in which, in the temporarily assembled state, the engaging confirming member receives external force from the tube insertion direction side and the side opposite thereto, there is the concern that the leg portions will come out from between the pairs of ribs, i.e., that the leg portions will come away from being restricted by the pairs of ribs.

A topic of the present disclosure is to provide a technique that, in a state before a pipe is inserted in a housing, can suppress a push-in member from coming apart from the housing even if external force, e.g., external force from the pipe insertion direction side and the side opposite thereto, is applied to the push-in member.

### Solution to Problem

A quick connector of one aspect of the present disclosure has: a housing into which a pipe having a spool portion is inserted; a retainer mounted within the housing, and having a claw portion that restrains the spool portion of the pipe that has been inserted; and a push-in member mounted at an outer peripheral portion of the housing, the push-in member being pushable inward from a first position to a second position, along a direction intersecting an insertion direction of the pipe, when the pipe is inserted as far as a restraint position at which the spool portion is restrained by the claw portions, wherein, at each of respective side surfaces of the outer peripheral portion, plural first fit-together portions are provided at the insertion direction, and catching holes are provided, and the push-in member has a base portion, a pair of leg portions extending from the base portion and nipping the outer peripheral portion at sides that include the respective side surfaces, plural second fit-together portions respectively provided at the pair of leg portions and respectively fitting together with the plural first fit-together portions movably in the intersecting direction, and hook portions provided at the pair of leg portions and entering into the housing from the catching holes and being pushed out from the catching holes by the spool portion when the pipe is inserted as far as the restraint position.

### Advantageous Effects of Invention

As described above, in accordance with the present disclosure, there can be provided a technique that, in a state before a pipe is inserted in a housing, can suppress a push-in member from coming apart from the housing even if external force, e.g., external force from the pipe insertion direction side and the side opposite thereto, is applied to the push-in member.

### BRIEF DESCRIPTION OF DRAWINGS

Fig. 1 is a side view of a quick connector relating to an embodiment of the present disclosure.
Fig. 2 is a drawing in which the quick connector of Fig. 1 is seen from a pipe insertion direction.
Fig. 3 is a cross-sectional view along line 3X-3X of the quick connector of Fig. 2.
Fig. 4 is a cross-sectional view along line 4X-4X of the quick connector of Fig. 2.
Fig. 5 is a side view illustrating a state in which a pipe is inserted in the quick connector of Fig. 1.
Fig. 6 is an exploded side view of the quick connector of Fig. 5.
Fig. 7 is an exploded perspective view of the quick connector of Fig. 5.
Fig. 8 is a perspective view of a tab used at the quick connector of Fig. 1.
Fig. 9 is a front view of the tab of Fig. 8.
Fig. 10 is a side view of the tab of Fig. 8.
Fig. 11 is a cross-sectional view along line 11X-11X of the tab of Fig. 10.
Fig. 12 is a bottom view of the tab of Fig. 8.
Fig. 13 is a cross-sectional view along line 13X-13X of the quick connector of Fig. 1.
Fig. 14 is a cross-sectional view along line 14X-14X of the quick connector of Fig. 5.

### DESCRIPTION OF EMBODIMENTS

A form for embodying the present disclosure is described hereinafter on the basis of the drawings. Structural elements that are denoted by using the same reference numerals in the respective drawings mean structural elements that are the same or similar. Note that there are cases in which redundant description and redundant reference numerals in the embodiment described hereinafter are omitted. Further, the drawings that are used in the following description are all schematic, and the relationships of the dimensions of the respective elements, the ratios of the respective elements, and the like that are shown in the drawings do not necessarily coincide with actual dimensions. Further, the relationships of the dimensions of the respective elements, the ratios of the respective elements, and the like do not necessarily coincide with one another in the plural drawings.

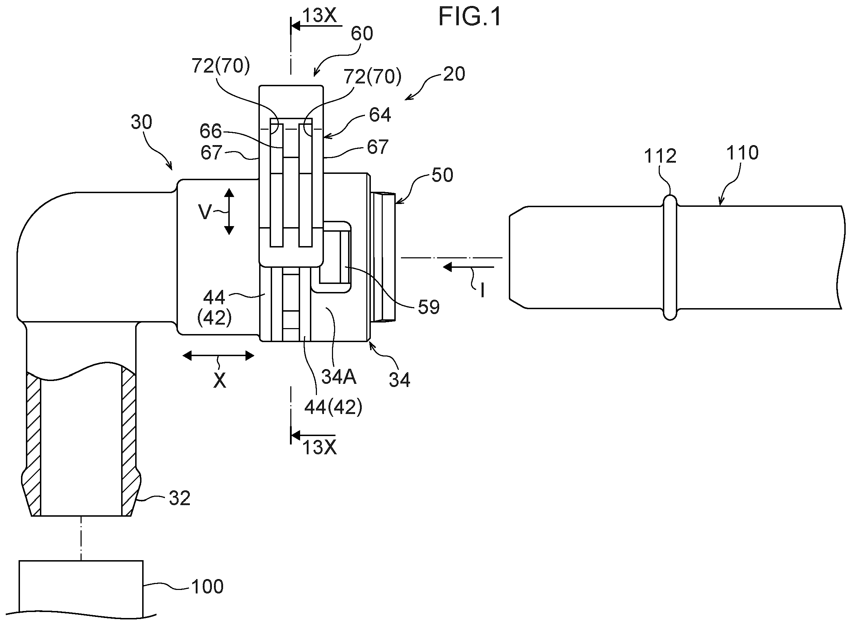

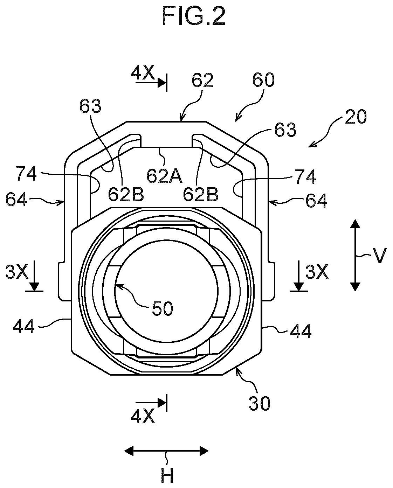

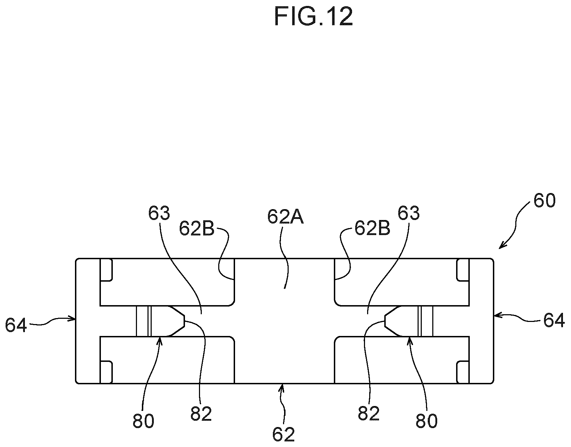

A quick connector 20 relating to an embodiment of the present disclosure is illustrated in Fig. 1 through Fig. 14. The quick connector 20 of the present embodiment is the coupling of a pipe, and functions to connect a tube 100 (see Fig. 1) and a pipe 110.

As illustrated in Fig. 1, the tube 100 is a tube made of metal, resin or rubber for example. The tube 100 of the present embodiment is, as an example, a tube made of resin.

The pipe 110 is a pipe made of metal or made of resin for example. The pipe 110 of the present embodiment is, as an example, a pipe made of metal. The pipe 110 has a spool portion 112 at the distal end portion. The spool portion 112 is formed so as to circle the outer peripheral portion at a position that is apart from the distal end surface by a predetermined distance, due to spool processing being carried out on the distal end portion of the pipe 110.

As illustrated in Fig. 1, Fig. 6 and Fig. 7, the quick connector 20 has a housing 30, a retainer 50, and a tab 60 serving as an example of the push-in member.

### [Housing 30]

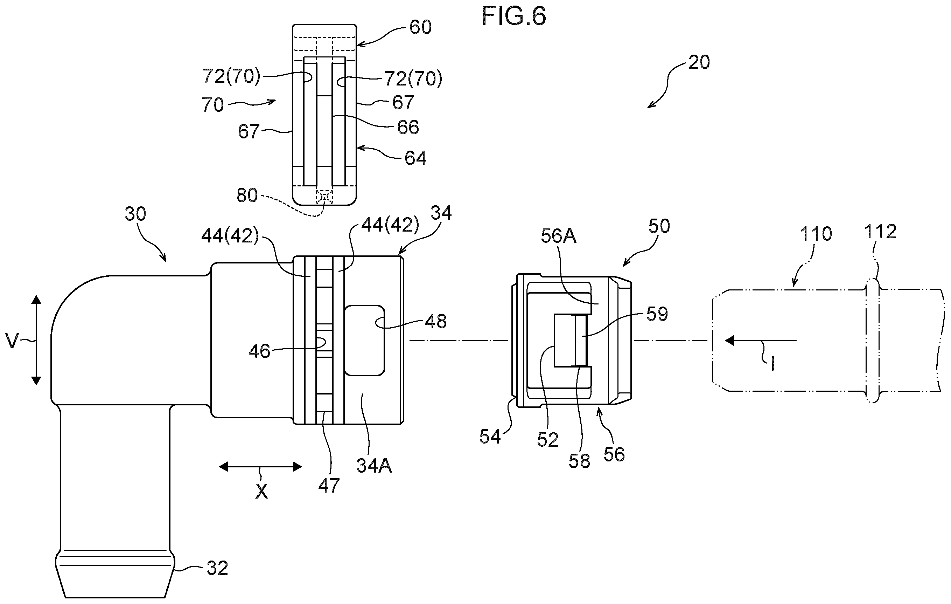

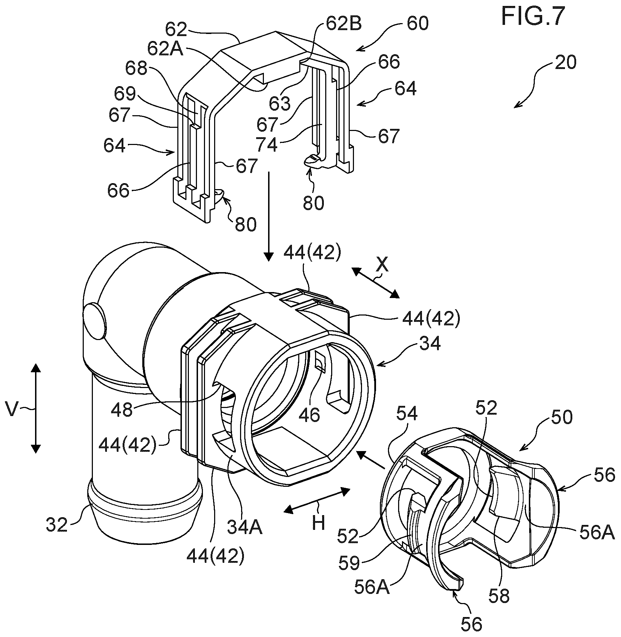

As illustrated in Fig. 6 and Fig. 7, the housing 30 is formed in a tubular shape. The housing 30 of the present embodiment is, as an example, the shape of a tube that is bent in an L-shape, but the present disclosure is not limited to this structure. For example, the housing 30 may be the shape of a tube that extends rectilinearly, or may be another shape. An axial direction one end side (the lower side in Fig. 1) of the housing 30 structures a tube connecting portion 32 to which the tube 100 is connected. The tube 100 is connected to the tube connecting portion 32 due to the tube connecting portion 32 being press-fit into the tube 100. Note that the axial direction of the housing 30 is indicated by arrow X in the drawings.

The axial direction another end side (the right side in Fig. 1) of the housing 30 structures a pipe insertion portion 34 into which the pipe 110 is inserted. Note that the direction of insertion of the pipe 110 with respect to the pipe insertion portion 34 is indicated by arrow I in the drawings. Hereinafter, the direction of inserting the pipe 110 is abbreviated as "pipe insertion direction". Note that, in the present embodiment, the axial direction of the pipe insertion portion 34 and the pipe insertion direction are the same direction.

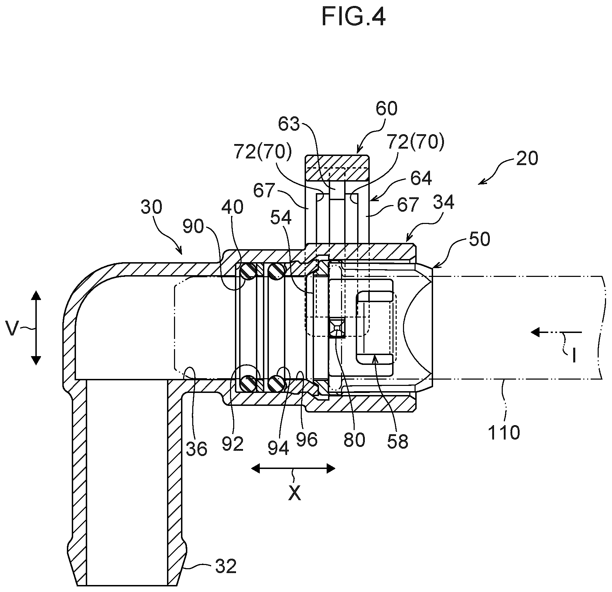

As illustrated in Fig. 4, the inner diameter of the pipe insertion portion 34 is made to be smaller than the inner diameter of the tube connecting portion 32. Namely, the internal flow path (also called internal space) of the housing 30 is larger at the axial direction another end side than at the one end side.

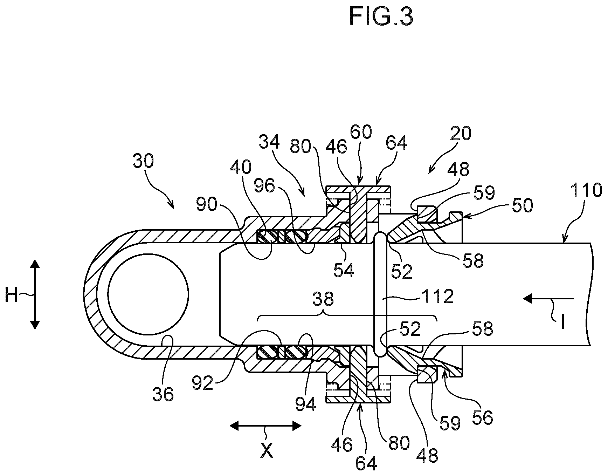

Further, at the pipe insertion portion 34, the deep side thereof in the pipe insertion direction is a small diameter portion 36, and the near side thereof in the pipe insertion direction is a large diameter portion 38 whose diameter is larger than the small diameter portion 36. The distal end of the pipe 110 is inserted in the small diameter portion 36 of the pipe insertion portion 34. On the other hand, the retainer 50 is attached to and the spool portion 112 of the pipe 110 is inserted in the large diameter portion 38 of the pipe insertion portion 34. A step 40 (see Fig. 3) is formed between the small diameter portion 36 and the large diameter portion 38 of the pipe insertion portion 34.

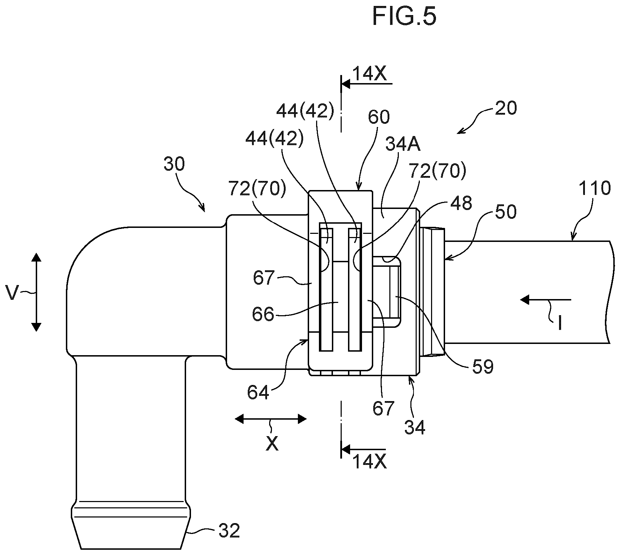

As illustrated in Fig. 5 and Fig. 6, plural first fit-together portions 42 and catching holes 46 are respectively provided at the outer peripheral portion of the pipe insertion portion 34. Specifically, the plural first fit-together portions 42 are provided at the axial direction X, and the catching hole 46 is provided in the respective side surfaces 34A of the outer peripheral portion of the pipe insertion portion 34. Note that the respective side surfaces 34A of the outer peripheral portion of the pipe insertion portion 34 mean the wall surfaces of the outer peripheral portion that are formed in a first direction that is orthogonal to the axial direction X. Note that the first direction of the housing 30 is indicated by arrow H in the drawings. Namely, the respective side surfaces 34A mean the wall surfaces that are at opposite sides of one another in the first direction H at the outer peripheral portion of the pipe insertion portion 34.

The plural first fit-together portions 42 are provided at the respective side surfaces 34A of the outer peripheral portion of the pipe insertion portion 34. The plural first fit-together portions 42 are fit with plural second fit-together portions 70 of the tab 60, respectively. Specifically, the plural first fit-together portions 42 and the plural second fit-together portions 70 are fit together with one another.

As illustrated in Fig. 5 through Fig. 7, the plural first fit-together portions 42 of the present embodiment are plural ribs 44 that are provided with an interval therebetween in the axial direction X at the respective side surfaces 34A of the pipe insertion portion 34. These ribs 44 project out from the respective side surfaces 34A, and extend along the peripheral direction of the pipe insertion portion 34. The intervals between the ribs 44 that are adjacent in the axial direction X are substantially equal in the peripheral direction of the pipe insertion portion 34. Further, in the following description, the peripheral direction of the pipe insertion portion 34 is abbreviated appropriately as "pipe peripheral direction". In the present embodiment, as an example, the plural first fit-together portions 42 are the pairs of ribs 44 that are provided with an interval therebetween the axial direction X at the respective side surfaces 34A of the pipe insertion portion 34. Note that the present disclosure is not limited to this structure. The number of ribs 44 that are formed at the respective side surfaces 34A respectively may be three or more.

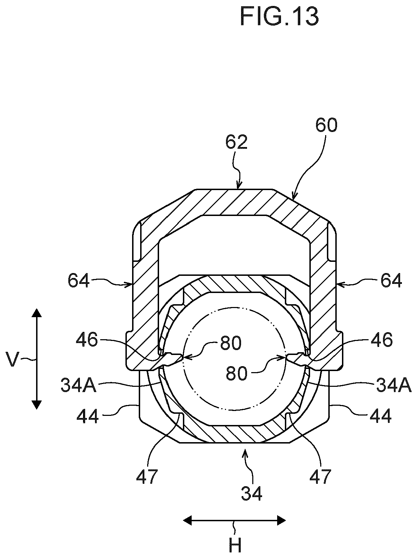

As illustrated in Fig. 6 and Fig. 13, the catching holes 46 are provided at the respective side surfaces 34A of the outer peripheral portion of the pipe insertion portion 34. A pair of hook portions 80 of the tab 60 catch on the catching holes 46. The catching holes 46 are through-holes that pass through the pipe insertion portion 34. As seen in a side view (i.e., as seen from the first direction H), the catching holes 46 are formed in the side surfaces 34A between the ribs 44 that are adjacent in the axial direction X, and, in the present embodiment, between the pairs of ribs 44. Further, as seen in a side view, the catching holes 46 are positioned at the central portion in a second direction that is orthogonal to the axial direction X and the first direction H, respectively. Note that the second direction of the housing 30 is indicated by arrow V in the drawings.

Catching portions 47 on which the hook portions 80 catch are provided respectively between the pairs of ribs 44 of the respective side surfaces 34A. The catching portions 47 are portions on which the hook portions 80, which have been pushed out from the catching holes 46, catch. Specifically, the catching portions 47 are steps that are formed at the side surfaces 34A and on which the hook portions 80 catch due to the hook portions 80 being pushed out from the catching holes 46, and thereafter, the tab 60 being pushed in further. Note that the tab 60 that is described later is pushed in along the second direction V of the housing 30.

Openings 48 are formed further toward the pipe insertion direction near side than the pairs of ribs 44 of the respective side surfaces 34A. These openings 48 are through-holes that pass through the pipe insertion portion 34, and a pair of claw portions 52 of the retainer 50 that is described later catch on the openings 48. The retainer 50 is mounted at the pipe insertion portion 34 due to the pair of claw portions 52 of the retainer 50 catching on the respective openings 48 in the state in which the retainer 50 is inserted in the large diameter portion 38 of the pipe insertion portion 34.

As illustrated in Fig. 3, an O-ring 90, a spacer 92, an O-ring 94 and a stopper 96 are disposed in the large diameter portion 38 of the pipe insertion portion 34, in that order from the deep side in the pipe insertion direction. The O-ring 90 and the O-ring 94 contact the outer peripheral surface of the pipe 110 inserted in the pipe insertion portion 34, and function to seal the region between the pipe insertion portion 34 and the pipe 110. Note that the O-ring 90 and the O-ring 94 contact the outer peripheral surface of the inserted pipe 110 from the distal end up to the spool portion 112. The spacer 92 is a member shaped as an annular plate, and is a member for the O-ring 90 and the O-ring 94 to be placed with an interval therebetween in the axial direction X. The stopper 96 is an annular member that is mounted at the inner surface of the large diameter portion 38, and functions to impede movement of the O-ring 90, the spacer 92 and the O-ring 94 in the axial direction X. Further, the retainer 50 contacts or is near to the stopper 96.

The housing 30 of the present embodiment is a resin, integrally-molded part, but the present disclosure is not limited to this. The housing 30 may be formed by plural members being joined together by welding or the like. Further, the housing 30 may be formed of a metal material.

### [Retainer 50]

As illustrated in Fig. 3, Fig. 6 and Fig. 7, the retainer 50 is formed in a tubular shape and is mounted within the housing 30. Specifically, the retainer 50 is inserted in and mounted at the pipe insertion portion 34. More specifically, the retainer 50 is inserted in the large diameter portion 38 of the pipe insertion portion 34, and is mounted at the pipe insertion portion 34 due to claw portions 59 that are described later catching on the openings 48 formed in the respective side surfaces 34A. Note that the pipe 110 is inserted in the retainer 50 that has been mounted in the pipe insertion portion 34. Namely, the pipe 110 is inserted in the pipe insertion portion 34 due to the pipe 110 being inserted into the retainer 50 that has been mounted in the pipe insertion portion 34.

The retainer 50 has the claw portions 52 that restrain the spool portion 112 of the inserted pipe 110. Specifically, due to the claw portions 52 catching on the spool portion 112 of the pipe 110, the pipe 110 coming out of the pipe insertion portion 34 is suppressed. Namely, at the quick connector 20 of the present embodiment, when the pipe 110 is inserted in the pipe insertion portion 34 of the housing 30 in the state in which the retainer 50 is mounted in the pipe insertion portion 34, the claw portions 52 catch on the spool portion 112, and the pipe 110 is connected to the pipe insertion portion 34 via the retainer 50.

As illustrated in Fig. 7, the retainer 50 has a ring portion 54, a pair of side frame portions 56 and the above-described claw portions 52.

The outer diameter of the ring portion 54 is larger than the small diameter portion 36 of the pipe insertion portion 34. Further, as illustrated in Fig. 3, the retainer 50 is inserted into the pipe insertion portion 34 with the ring portion 54 leading. In the state in which the retainer 50 is inserted in the large diameter portion 38 of the pipe insertion portion 34, the ring portion 54 contacts or is near to the stopper 96 that is disposed within the pipe insertion portion 34. The retainer 50 being inserted too far in is suppressed due to this ring portion 54 contacting the stopper 96.

The side frame portions 56 extend in the axial direction X from the ring portion 54. In other words, the side frame portions 56 extend from the ring portion 54 toward the side opposite the pipe insertion direction. The side frame portions 56 are provided at the ring portion 54 with an interval therebetween in the peripheral direction. In the present embodiment, the side frame portions 56 are provided as a pair at the ring portion 54.

The side frame portions 56 are regions formed in frame shapes, and elastic legs 58 are provided at the inner sides thereof. The elastic legs 58 are plates that extend toward the ring portion 54 from frame portions 56A that are positioned at the side opposite the ring portion 54. The elastic legs 58 are elastically deformable with respect to the frame portions 56A. Specifically, the distal end portions of the elastic legs 58 are free ends, and the distal end portions can elastically deform toward the radial direction inner side and outer sides of the retainer 50 with the frame portions 56A being the origins. Note that, in the state in which the retainer 50 is mounted at the pipe insertion portion 34, the respective elastic legs 58 of the both side frame portions 56 elastically deform in directions in which the respective distal end portions thereof approach and move away from one another, with the respective frame portions 56A being the origins. Note that, in the present embodiment, the directions in which the distal end portions of the respective elastic legs 58 approach and move away from one another is the same direction as the first direction of the housing 30. Further, the distal end portions of the elastic legs 58 structure the claw portions 52.

As illustrated in Fig. 7, the claw portions 59 are provided at the outer surfaces of the elastic legs 58, further toward the root sides than the claw portions 52. The claw portions 59 catch on the openings 48. Specifically, in the state in which the retainer 50 is inserted in the pipe insertion portion 34, the claw portions 59 of the pair of side frame portions 56 catch on the openings 48, respectively.

The retainer 50 of the present embodiment is a resin, integrally-molded part, but the present disclosure is not limited to this. The housing 30 may be formed by plural members being joined together by welding or the like. Further, the housing 30 may be formed of a metal material.

### [Tab 60]

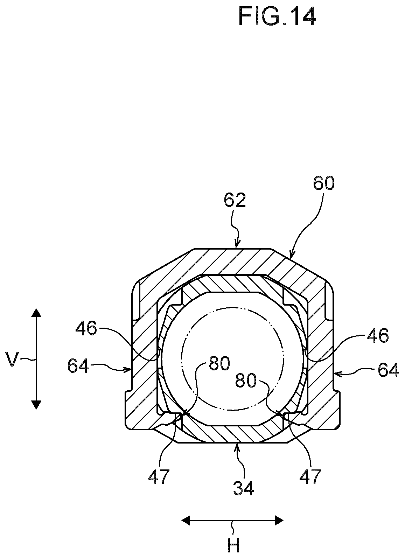

The tab 60 functions to confirm that the pipe 110 has been inserted up to a predetermined position with respect to the pipe insertion portion 34. Specifically, as illustrated in Fig. 1 and Fig. 5, the tab 60 is mounted at the outer peripheral portion of the pipe insertion portion 34. Further, when the pipe 110 is inserted up to a restrained position at which the spool portion 12 is restrained by the claw portions 52 of the retainer 50, the tab 60 being pushable inward in a direction intersecting the pipe insertion direction as seen in a side view. More specifically, the tab 60 being pushable inward along the second direction V from a first position to a second position. Note that the restrained position at which the spool portion 112 of the pipe 110 is restrained by the claw portions 52 of the retainer 50 is the position shown in Fig. 3 for example. The first position of the tab 60 along the second direction V is, as shown in Fig. 1 and Fig. 13, the position of the tab 60 at the time when the hook portions 80 of the tab 60 are caught on the catching holes 46. Further, the second position of the tab 60 along the second direction V is, as shown in Fig. 5 and Fig. 14, the position of the tab 60 at the time when the tab 60 is pushed in from the first position and the hook portions 80 are caught on the catching portions 47 of the housing 30.

The tab 60 has a base portion 62, a pair of leg portions 64, the plural second fit-together portions 70, and the pair of hook portions 80.

### (Base Portion 62)

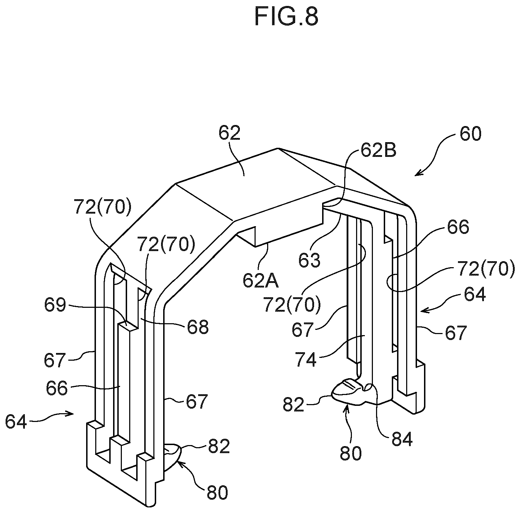

As illustrated in Fig. 8, the base portion 62 is formed in a plate shape. The base portion 62 is the portion that connects the pair of leg portions 64. Further, the base portion 62 is the portion to which a worker applies push-in force at the time of pushing the tab 60 in with respect to the housing 30.

### (Leg Portions 64)

As illustrated in Fig. 8 through Fig. 10, the pair of leg portions 64 are formed in plate shapes, and extend from the both end portions of the base portion 62, respectively. Specifically, the pair of leg portions 64 extend from the both end portions of the base portion 62 along the thickness direction of the base portion 62. In the present embodiment, the pair of leg portions 64 nip the outer peripheral portion of the pipe insertion portion 34 from the respective side surfaces 34A. Note that, hereinafter, the sides at which the pair of leg portions 64 face one another are called the inner sides, and the sides opposite thereto are called the outer sides of the leg portions 64.

### (Second Fit-Together Portions 70)

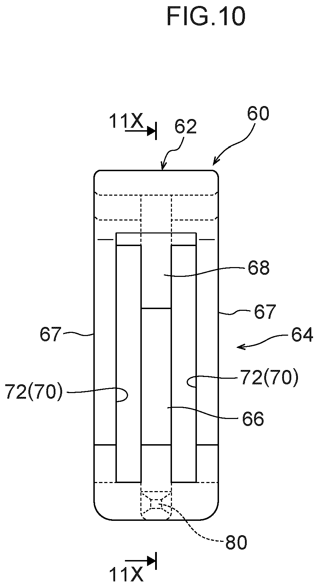

As illustrated in Fig. 8 and Fig. 10, the plural second fit-together portions 70 are provided at the pair of leg portions 64, respectively. The plural second fit-together portions 70 are fit together with the plural first fit-together portions 42, respectively. Further, movement of the plural second fit-together portions 70 in a direction intersecting the pipe insertion direction and with respect to the first fit-together portions 42 is permitted. Specifically, movement of the plural second fit-together portions 70 in the second direction V with respect to the plural first fit-together portions 42 is permitted. In other words, the plural second fit-together portions 70 are fit-together with the plural first fit-together portions 42 respectively so as to be able to move in the second direction V.

The plural second fit-together portions 70 are plural slits 72, respectively. The plural slits 72 are provided at the leg portions 64 with an interval therebetween in the axial direction. The plural slits 72 extend in the extension directions of the leg portions 64. Note that, in the present embodiment, the extension directions of the leg portions 64 are the same direction as the thickness direction of the base portion 62, and are the direction along the second direction V in the state in which the tab 60 is at the first position and the second position of the housing 30.

The plural slits 72 are provided at intermediate portions in the extension directions of the leg portions 64. Namely, the slits 72 are long holes that extend in the extension directions of the leg portions 64. In the present embodiment, as an example, a pair of the slits 72 is provided at the leg portion 64. The pair of ribs 44 provided at the side surface 34A of the housing 30 is fit with the pair of slits 72.

As illustrated in Fig. 10, a plate-shaped portion 66 whose width is narrow is formed in the leg portion 64 by the plural slits 72, between the adjacent slits. In the present embodiment, because the pair of slits 72 is formed in the leg portion 64, the one plate-shaped portion 66 is formed between the pair of slits 72. A thin-walled portion 68 is provided at the base portion 62 side of the plate-shaped portion 66. Specifically, a concave portion 69 is provided at the base portion 62 side of the plate-shaped portion 66 at the outer surface side thereof (the outer side of the leg portion 64). This concave portion 69 is a thinned portion of the plate-shaped portion 66, and the portion of the plate-shaped portion 66 corresponding to the concave portion 69 is the thin-walled portion 68.

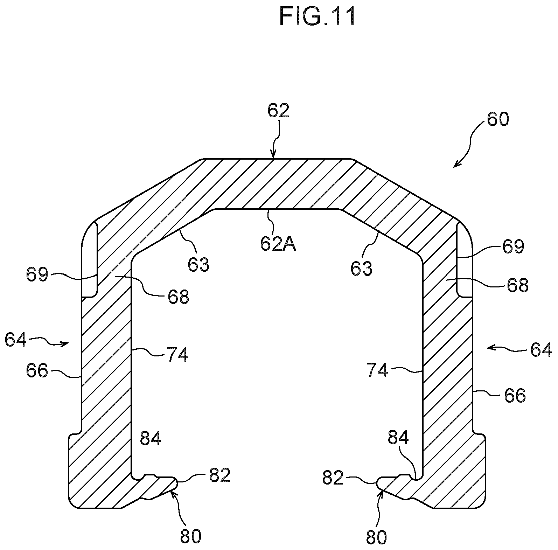

As illustrated in Fig. 8 and Fig. 11, the thickness of the plate-shaped portion 66 of the leg portion 64 is thicker than the thickness of plate-shaped portions 67 that form the width direction end portions of the leg portion 64. In other words, the thickness of the plate-shaped portions 67 is thinner than that of the plate-shaped portion 66. In the present embodiment, convex portions 74, which extend toward the base portion 62 from the distal end portions, are respectively formed at the inner sides of and the width direction central portions of the respective leg portions 64. Therefore, the thickness of the plate-shaped portions 67 is thinner than that of the plate-shaped portions 66. Further, a projecting portion 62A is provided at the leg portion 64 side of the base portion 62. This projecting portion 62A is provided at the base portion 62 between the pair of leg portions 64. Further, at the leg portion 64 sides of the base portion 62, convex portions 63 extend from respective side surfaces 62B of the projecting portion 62A toward the facing leg portions 64. The projecting portion 62A and the convex portions 74 of the respective leg portions 64 are respectively connected by these convex portions 63.

### (Hook Portions 80)

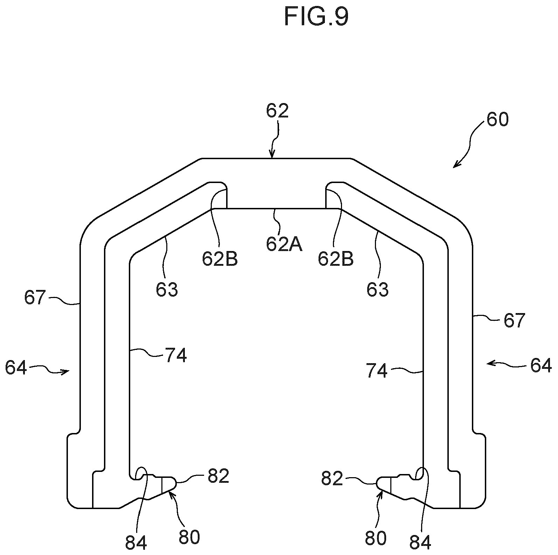

As illustrated in Fig. 8 and Fig. 9, the hook portions 80 are provided at the pair of leg portions 64, respectively. Specifically, the hook portions 80 are provided at the distal end portions of and the inner sides of the pair of leg portions 64, respectively. The hook portions 80 are provided at the width direction central portions of the leg portions 64. In the present embodiment, the hook portions 80 project out from the convex portions 74.

As illustrated in Fig. 13, when the tab 60 is at the first position with respect to the housing 30, the pair of hook portions 80 are caught on the catching holes 46 of the housing 30. At this time, the hook portions 80 pass through the catching holes 46, and distal end portions 82 are within the housing 30. Then, when the pipe 110 is inserted in the pipe insertion portion 34 up to the restrained position, the hook portions 80 are pushed out from the catching holes 46 by the spool portion 112. Here, inclined surfaces, which, by contacting the spool portion 112, convert the insertion force of the pipe 110 into force that elastically deforms the pair of leg portions 64 (deforms the pair of leg portions 64 such that the leg portions 64 spread), are formed at the distal end portions 82 of the hook portions 80.

Recesses 84 on which the catching holes 46 catch are provided at the inner surfaces of the pair of hook portions 80, respectively. The hole walls of the catching holes 46 catch on these respective recesses 84 (see Fig. 13).

Although the tab 60 of the present embodiment is a resin, integrally-molded part, the present disclosure is not limited to this. The tab 60 may be formed by joining plural members by welding or the like. Further, the tab 60 may be formed of a metal material.

Operation and effects of the present embodiment are described next.
At the quick connector 20 of the present embodiment, when the pipe 110 that has the spool portion 112 is inserted within the housing 30 up to the restrained position, the spool portion 112 is restrained by the claw portions 52 of the retainer 50. Namely, the inserted pipe 110 being pulled out from the housing 30 is impeded. Further, when the pipe 110 is inserted up to the restrained position, the hook portions 80, which have entered into the housing 30 interior from the catching holes 46, are pushed out from the catching holes 46 by the spool portion 112. Here, the plural second fit-together portions 70 (the slits 72 in the present embodiment) are respectively fit-together with the plural first fit-together portions 42 (the ribs 44 in the present embodiment) so as to be able to move in the second direction V. Therefore, due to the hook portions 80 being pushed out from the catching holes 46, the tab 60 becomes able to be pushed in from the first position toward the second position along the second direction V. Further, by pushing the tab 60 in, the base portion 62 approaches the outer peripheral portion. Due thereto, it can be confirmed, visually for example, that the pipe 110 has been inserted up to a predetermined position (the restrained position) with respect to the housing 30. Note that position of the tab 60, that has been pushed in to the second position, is restrained due to the hook portions 80 catching on the catching portions 47. Note that the tube 100 and the pipe 110 are connected via the quick connector 20 due to the tube 100 being connected to the tube connecting portion 32.

Further, at the quick connector 20, the plural second fit-together portions 70 of the tab 60 and the plural first fit-together portions 42 of the housing 30 are respectively fit together. Therefore, in the state in which the tab 60 is at the second position before the pipe 110 is inserted in the housing 30, even if external force is applied to the tab 60 from the pipe insertion direction side and the side opposite thereto, the second fit-together portions 70 coming out of the first fit-together portions 42 (the fitting being cancelled) is suppressed. Namely, in accordance with the quick connector 20, in the state before insertion of the pipe into the housing 30, even if external force is applied to the tab 60 from the pipe insertion direction side and the side opposite thereto, the tab 60 coming apart from the housing 30 can be suppressed.

In the quick connector 20 of the present embodiment, because the plural slits 72 are provided at the respective leg portions 64, the leg portions 64 easily deform elastically (deform in directions of spreading). Namely, when the pipe 110 is inserted up to the restrained position, it is easy for the hook portions 80 to be pushed out from the catching holes 46 by the spool portion 112. Further, the push-in load that is needed at the time of pushing the tab 60 in can be reduced. Moreover, because the plural slits 72 are provided at the respective leg portions 64, the used amount of the material (resin in the present embodiment) that forms the leg portions 64 can be reduced. The weight of the quick connector 20 can thereby be lightened.

In the quick connector 20 of the present embodiment, the plural slits 72 are provided at the extending direction intermediate portions of the respective leg portions 64. Therefore, as compared with a structure in which the plural slits 72 are provided at the distal end portions of the leg portions 64 for example, the leg portions 64 are not divided at the distal end portions thereof, and therefore, a decrease in rigidity at the distal end portions of the leg portions 64 can be suppressed. Due thereto, in the state before the pipe is inserted in the housing 30, even if external force is applied to the tab 60 from the pipe insertion direction side and the side opposite thereto, the tab 60 coming apart from the housing 30 can be suppressed even more.

In the quick connector 20 of the present embodiment, the thin-walled portions 68 are provided at the root portion sides in the extension directions of the plate-shaped portions 66 at the leg portions 64. Therefore, as compared with a structure in which the thin-walled portions 68 are provided at the distal end portion sides in the extension directions of the plate-shaped portions 66 for example, it is easy for the leg portions 64 to bend (to spread). Moreover, because the thin-walled portions 68 are provided at the plate-shaped portions 66, the used amount of the material (resin in the present embodiment) that forms the leg portions 64 can be reduced. The weight of the quick connector 20 can thereby be lightened.

In the quick connector 20 of the present embodiment, the thin-walled portions 68 are provided at the outer surface sides of the plate-shaped portions 66. Therefore, as compared with a structure in which the thin-walled portions 68 are provided at the inner surface sides of the plate-shaped portions 66 for example, it is easy for the leg portions 64 to bend (spread) with the thin-walled portions 68 as the origins.

In the quick connector 20 of the present embodiment, the hook portions 80 are provided at the distal end portions of, and at the central portions in the pipe insertion direction of the leg portions 64. Therefore, at the time when the hook portions 80 are pushed out from the catching holes 46 by the spool portion 112, it is difficult for the leg portions 64 to twist, and the leg portions 64 spread stably. Namely, in accordance with the quick connector 20, as compared with a structure in which the hook portions 80 are provided at the distal end portions of, and at the pipe insertion direction end portions of the leg portions 64 for example, at the time when the leg portions 64 spread, it is difficult for the leg portions 64 to twist, and it is easy to push in the tab 60 at the housing 30.

In the quick connector 20 of the present embodiment, the recesses 84 on which the catching holes 46 catch are provided at the inner surfaces of the hook portions 80.
Therefore, in a case in which external force from the side opposite the pushing-in direction is applied to the tab 60, the catching holes 46 catch on the recesses 84 of the hook portions 80, and the hook portions 80 coming out of the catching holes 46 is suppressed. Due thereto, in the state in which the spool portion 112 has not reached the restrained position, the tab 60 coming apart from the housing 30 is suppressed.

Further, in the quick connector 20 of the present embodiment, the pairs of ribs 44 are provided at the respective side surfaces 34A of the housing 30 respectively, and the pairs of slits 72 are provided at the pair of leg portions 64 respectively. Therefore, as compared with a structure in which three or more ribs and three or more slits are provided for example, the tab 60 coming apart from the housing 30 can be suppressed by a simple structure.

In the quick connector 20 of the present embodiment, due to the thickness of the plate-shaped portions 67 being made to be thinner than the thickness of the plate-shaped portions 66, the effect of suppressing the tab 60 coming apart from the housing 30, and the effect of making it easy for the leg portions 64 to bend (easy to spread), can both be achieved.

In the quick connector 20 of the embodiment, the first fit-together portions 42 are the ribs 44, and the second fit-together portions 70 are the slits 72. However, the present disclosure is not limited to this structure. For example, the first fit-together portions 42 may be grooves that extend in the peripheral direction of the outer peripheral portion of the housing 30, and the second fit-together portions 70 may be projections (e.g., ribs) that project out from the leg portions 64 toward the inner sides and fit together movably with these grooves.

Although a form embodying the present disclosure has been described above by way of an embodiment, this embodiment is an example, and the present disclosure can be implemented by being changed in various ways within a scope that does not depart from the gist thereof. Further, it goes without saying that the scope of the right of the present disclosure is not limited to this embodiment.

The following notes are further disclosed in relation to the above embodiment.

### (Note 1)

A quick connector having:
a housing into which a pipe having a spool portion is inserted;
a retainer mounted within the housing, and having a claw portion that restrains the spool portion of the pipe that has been inserted; and
a push-in member mounted at an outer peripheral portion of the housing, the push-in member being pushable inward from a first position to a second position, along a direction intersecting an insertion direction of the pipe, when the pipe is inserted as far as a restraint position at which the spool portion is restrained by the claw portions,
wherein:
   at each of respective side surfaces of the outer peripheral portion, a plurality of first fit-together portions are provided at the insertion direction, and catching holes are provided, and
   the push-in member has a base portion, a pair of leg portions extending from the base portion and nipping the outer peripheral portion at sides that include the respective side surfaces, a plurality of second fit-together portions respectively provided at the pair of leg portions and respectively fitting together with the plurality of first fit-together portions movably in the intersecting direction, and hook portions provided at the pair of leg portions and entering into the housing from the catching holes and being pushed out from the catching holes by the spool portion when the pipe is inserted as far as the restraint position.

In the quick connector of Note 1, when the pipe that has the spool portion is inserted in the housing up to the restrained position, the spool portion is restrained by the claw portions of the retainer. Namely, the inserted pipe portion coming out from the housing is impeded. Further, when the pipe is inserted up to the restrained position, the hook portions, which have entered into the housing from the catching holes, are pushed out from the catching holes by the spool portion. Here, at the push-in member, the plurality of second fit-together portions are fit together with the plurality of first fit-together portions movably in a direction intersecting the insertion direction of the pipe. Therefore, due to the hook portions being pushed out of the catching holes, the push-in member being pushable inward from the first position toward the second position along a direction intersecting the insertion direction of the pipe. Further, due to the push-in member being pushed in, the base portion approaches the outer peripheral portion. Due thereto, it can be confirmed, visually for example, that the pipe has been inserted up to a predetermined position (the restrained position) with respect to the housing.

Further, in the quick connector of Note 1, the plurality of first fit-together portions of the housing and the plurality of second fit-together portions of the push-in member are fit together respectively. Therefore, in the state in which the push-in member is at the second position before the pipe is inserted into the housing, the second fit-together portions coming apart from the first fit-together portions (the fitting being cancelled) is suppressed even if external force is applied to the push-in member from the pipe insertion direction side and the side opposite thereto. Namely, in accordance with the quick connector, in the state before the pipe is inserted in the housing, the push-in member coming apart from the housing can be suppressed even if external force is applied to the push-in member from, for example, the pipe insertion direction side and the side opposite thereto.

### (Note 2)

The quick connector of Note 1, wherein:
the plurality of first fit-together portions are a plurality of ribs provided at the respective side surfaces of the outer peripheral portion with an interval therebetween in the insertion direction, and projecting from the side surfaces and extending in a peripheral direction, and
the plurality of second fit-together portions are a plurality of slits that are provided at the leg portions with an interval therebetween in the insertion direction, and that extend in extension directions of the leg portions, and into which the plurality of ribs are respectively inserted.

In the quick connector of Note 2, because the plurality of slits are provided at the leg portions, it is easy for the leg portions to elastically deform (spread). Namely, the when pipe is inserted up to the restrained position, it is easy for the hook portions to be pushed out from the catching holes by the spool portion. Further, the push-in load that is needed at the time of pushing the push-in member in can be reduced. Moreover, because the plurality of slits are provided at the leg portions, the used amount of the material (resin) that forms the leg portions can be reduced. The weight of the quick connector can thereby be lightened.

### (Note 3)

The quick connector of Note 2, wherein the plurality of slits are provided at intermediate portions in the extension directions of the leg portions.

In the quick connector of Note 3, the plurality of slits are provided at the intermediate portions in the extension directions of the leg portions. Therefore, as compared with a structure in which the plurality of slits are provided at the distal end portions of the leg portions for example, the leg portions are not divided at the distal end portions thereof, and therefore, a decrease in rigidity at the distal end portions of the leg portions can be suppressed. Due thereto, in the state before the pipe is inserted in the housing, even if external force is applied to the push-in member from the pipe insertion direction side and the side opposite thereto, the push-in member coming apart from the housing can be suppressed even more.

### (Note 4)

The quick connector of Note 2 or Note 3, wherein thin-walled portions are provided, at root portion sides in the extension directions, at plate-shaped portions formed at the leg portions between the slits that are adjacent to one another.

In the quick connector of Note 4, the thin-walled portions are provided at the root portion sides in the extension directions of the plate-shaped portions at the leg portions. Therefore, as compared with a structure in which the thin-walled portions are provided at the distal end portion sides in the extension directions of the plate-shaped portions for example, it is easy for the leg portions to bend (to spread). Moreover, because the thin-walled portions are provided at the plate-shaped portions, the used amount of the material (resin) that forms the leg portions can be reduced. The weight of the quick connector can thereby be lightened.

### (Note 5)

The quick connector of Note 4, wherein:
concave portions are provided at outer surface sides of the plate-shaped portions, and
portions corresponding to the concave portions at the plate-shaped portions are the thin-walled portions.

In the quick connector of Note 5, because the thin-walled portions are provided at the outer surface sides of the plate-shaped portions, as compared with a structure in which the thin-walled portions are provided at the inner surface sides of the plate-shaped portions for example, it is easy for the leg portions to bend (spread) with the thin-walled portions as the origins.

### (Note 6)

The quick connector of any one of Note 1 through Note 5, wherein the hook portions are provided at distal end portions of, and at central portions in the insertion direction of, the leg portions.

In the quick connector of Note 6, the hook portions are provided at the distal end portions of, and at the central portions in the pipe insertion direction of, the leg portions. Therefore, at the time when the hook portions are pushed out from the catching holes by the spool portion, it is difficult for the leg portions to twist, and the leg portions spread stably. Namely, in accordance with the above-described quick connector, as compared with a structure in which the hook portions are provided at the distal end portions of, and at the pipe insertion direction end portions of the leg portions for example, at the time when the leg portions spread, it is difficult for the leg portions to twist, and it is easy to push in the push-in member at the housing.

### (Note 7)

The quick connector of any one of Note 1 through Note 5, wherein recesses at which the catching holes catch are provided at inner surfaces of the hook portions.

In the quick connector of Note 7, the recesses at which the catching holes catch are provided at the inner surfaces of the hook portions. Therefore, in a case in which external force from the side opposite the pushing-in direction is applied to the push-in member, the catching holes catch on the recesses of the hook portions, and the hook portions coming out of the catching holes is suppressed. Due thereto, in the state in which the spool portion has not reached the restrained position, the push-in member coming apart from the housing is suppressed.

### (Note 8)

The quick connector of any one of Note 3 through Note 7, wherein:
a pair of the ribs is provided at each of the respective side surfaces of the outer peripheral portion, and
a pair of the slits is provided at each of the pair of leg portions.

In the quick connector of Note 8, a pair of the ribs is provided at each of the respective side surfaces of the outer peripheral portion, and a pair of the slits is provided at each of the pair of leg portions. Therefore, as compared with a structure in which three or more ribs and three or more slits are provided for example, the push-in member coming apart from the housing can be suppressed by a simple structure.

### (Note 9)

The quick connector of Note 8, wherein a thickness of second plate-shaped portions, which are formed at width direction end portions of the leg portions, is thinner than a thickness of first plate-shaped portions formed at the leg portions between the slits that are adjacent to one another.

In the quick connector of Note 9, due to the thickness of the second plate-shaped portions being made to be thinner than the thickness of the first plate-shaped portions, the effect of suppressing the push-in member coming apart from the housing, and the effect of making it easy for the leg portions to bend (easy to spread), can both be achieved.

The disclosure of Japanese Patent Application No. 2022-194435 filed on December 5, 2022 is, in its entirety, incorporated by reference into the present specification.

All publications, patent applications, and technical standards mentioned in the present specification are incorporated by reference into the present specification to the same extent as if such individual publication, patent application, or technical standard was specifically and individually indicated to be incorporated by reference.

## Claims

1. A quick connector, comprising:
a housing into which a pipe having a spool portion is inserted;
a retainer mounted within the housing, and having a claw portion that restrains the spool portion of the pipe that has been inserted; and
a push-in member mounted at an outer peripheral portion of the housing, the push-in member being pushable inward from a first position to a second position, along a direction intersecting an insertion direction of the pipe, when the pipe is inserted as far as a restraint position at which the spool portion is restrained by the claw portions,
wherein:
at each of respective side surfaces of the outer peripheral portion, a plurality of first fit-together portions are provided in the insertion direction, and catching holes are provided, and
the push-in member has a base portion, a pair of leg portions extending from the base portion and nipping the outer peripheral portion at sides that include the respective side surfaces, a plurality of second fit-together portions respectively provided at the pair of leg portions and respectively fitting together with the plurality of first fit-together portions movably in the intersecting direction, and hook portions provided at the pair of leg portions and entering into the housing from the catching holes and being pushed out from the catching holes by the spool portion when the pipe is inserted as far as the restraint position.

2. The quick connector of Claim 1, wherein:
the plurality of first fit-together portions are a plurality of ribs provided at the respective side surfaces of the outer peripheral portion with an interval therebetween in the insertion direction, and projecting from the side surfaces and extending in a peripheral direction, and
the plurality of second fit-together portions are a plurality of slits that are provided at the leg portions with an interval therebetween in the insertion direction, and that extend in extension directions of the leg portions, and into which the plurality of ribs are respectively inserted.

3. The quick connector of Claim 2, wherein the plurality of slits are provided at intermediate portions in the extension directions of the leg portions.

4. The quick connector of Claim 2 or Claim 3, wherein thin-walled portions are provided, at root portion sides in the extension directions, at plate-shaped portions formed at the leg portions between the slits that are adjacent to one another.

5. The quick connector of Claim 4, wherein:
concave portions are provided at outer surface sides of the plate-shaped portions, and
portions corresponding to the concave portions at the plate-shaped portions are the thin-walled portions.

6. The quick connector of any one of Claim 1 through Claim 5, wherein the hook portions are provided at distal end portions of, and at central portions in the insertion direction of, the leg portions.

7. The quick connector of any one of Claim 1 through Claim 5, wherein recesses at which the catching holes catch are provided at inner surfaces of the hook portions.

8. The quick connector of any one of Claim 3 through Claim 5, wherein:
a pair of the ribs is provided at each of the respective side surfaces of the outer peripheral portion, and
a pair of the slits is provided at each of the pair of leg portions.

9. The quick connector of Claim 8, wherein a thickness of second plate-shaped portions, which are formed at width direction end portions of the leg portions, is thinner than a thickness of first plate-shaped portions formed at the leg portions between the slits that are adjacent to one another.
